# EUROPEAN PATENT APPLICATION

(11) **EP 2 395 758 A2**
(43) Date of publication of application: **14.12.2011**
(21) Application number: 11157008.1
(22) Date of filing: 04.03.2011
(51) Int. Cl.: H04N 9/31

(54) **Image display apparatus**

(30) Priority: 14.06.2010 JP 2010134764
(71) Applicant: Panasonic Corporation, Kadoma-shi Osaka 571-8501 (JP)
(72) Inventor: Enomoto, Hirofumi, Osaka-shi, Osaka 540-6207 (JP); Hatase, Yuichi, Osaka-shi, Osaka 540-6207 (JP); Kitaoka, Yoshitaka, Osaka-shi, Osaka 540-6207 (JP); Baba, Shinji, Osaka-shi, Osaka 540-6207 (JP)
(74) Representative: Eisenführ, Speiser & Partner

(57) **Abstract**

The present invention provides an image display apparatus which includes a red color laser light source that outputs red color laser light; a blue color laser light source that outputs blue color laser light; and a green color laser light source that outputs green color laser light. Further, the green color laser light source includes a semiconductor laser that emits non-visible light; and a wavelength convertor that converts the non-visible light to visible light and thereby outputs a green color laser. Furthermore, the image display apparatus has a projecting lens that outputs the laser light of the respective colors; and a case that retains the red color laser light source, the blue color laser light source, and the projecting lens. The case has a protrusion that retains the green color laser light source.

## Description

### CROSS-REFERENCE TO RELATED APPLICATIONS

The present application claims priority under 3 5 U. S. C. §119 of Japanese Application No. 2010-134764, filed on June 14, 2010, the disclosure of which is expressly incorporated by reference herein in its entirety.

### BACKGROUND OF THE INVENTION

### 1. Field of the Invention

The present invention relates to an image display apparatus in which a laser light source apparatus using a semiconductor laser is incorporated.

### 2. Description of Related Art

In recent years, laser light has drawn attention as a light source of an image display apparatus which can perform large-screen display, and technology development of a semiconductor laser has been promoted to form this laser light. Compared with a ultra-high pressure mercury lamp (UHP lamp) conventionally used as a light source of an image display apparatus or a light-emitting diode (LED) recently used in a small-sized image display apparatus, a light source using a semiconductor laser light source has advantages including good color reproducibility, instant light up, long life, and high efficiency in electrical/optical conversion.

Hereinafter, a conventional laser light source apparatus will be explained. The conventional light source apparatus has a red color laser light source, a blue color laser light source, and a green color laser light source as short-wavelength laser light sources which consecutively emit red color (R) laser light, blue color (B) laser light, and green color (G) laser light, respectively. The red color laser light source and the blue color laser light source are semiconductor lasers which emit red color laser light and blue color laser light, respectively. The green color laser light source has a structure in which wavelength conversion is performed to laser light of the semiconductor lasers so as to emit green color laser light. This kind of technology is described in Japanese Patent Application Publication No. 2010-32796.

When red color (R) laser light, blue color (B) laser light, and green color (G) laser light are emitted to form an image, however, more light energy needs to be emitted in the green color (G) laser light than the other laser light in terms of human visibility.

Accordingly, the green color laser light source needs to be supplied with current several times higher than the other laser light sources. Also, since the amount of heat generated from the green color laser light source is greater than the other laser light sources, there is a likelihood that the components of the green color laser light source will not be able to withstand the heat depending on a heat dissipation method for the green color laser light source, and the output of the green color laser light source will be deteriorated.

An advantage of the present invention is thus to provide an image display apparatus in which heat dissipation of a green color laser light source is improved, output of the green color laser light source is stabilized, and the entire apparatus can be downsized in view of the conventional technology.

### SUMMARY OF THE INVENTION

In view of the above circumstances, the present invention provides an image display apparatus which includes the following. Specifically, the image display apparatus includes a red color laser light source that outputs red color laser light; a blue color laser light source that outputs blue color laser light; and a green color laser light source that outputs green color laser light. Further, the green color laser light source includes a semiconductor laser that emits non-visible light; and a wavelength convertor that converts the non-visible light to visible light and thereby outputs a green color laser. Furthermore, the image display apparatus has a projecting lens that outputs the laser light of the respective colors; and a case that retains the red color laser light source, the blue color laser light source, and the projecting lens. The case has a protrusion that retains the green color laser light source.

Also, according to the present invention, the protrusion is provided so as to extend a plane of the case in which the projecting lens is retained.

Another advantage of the present invention is to efficiently perform heat dissipation of the green color laser light source. For this, the protrusion is integrally formed with the case in the present invention.

Another advantage of the present invention is to reduce the effect of the heat dissipation from the green color laser light source upon the other components on the case. For this, a predetermined gap is provided by the protrusion between the green color laser light source and the case in the present invention.

Another advantage of the present invention is to improve the heat dissipation of the green color laser light source. For this, the present invention is characterized in that a plane of the green color laser light source in a longitudinal direction contacts the protrusion.

Another advantage of the present invention is to stably retain the protrusion. For this, according to the present invention, resin is provided in the gap.

It is known that a blue color laser light source is hardly affected by heat. Another advantage of the present invention is to reduce the effect of the heat dissipation from the green color laser light source upon the red color laser light source and the blue color laser light source. For this, according to the present invention, the blue color laser light source is positioned in a plane of the case where the projecting lens is retained, and the red color laser light source is positioned in another plane of the case which is different from the plane where the projecting lens is retained.

### BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:
Fig. 1 illustrates a schematic configuration of an image display apparatus according to an embodiment of the present invention;
Fig. 2 is a perspective view of the image display apparatus according to the embodiment of the present invention;
Fig. 3 illustrates a green color laser light source according to the embodiment of the present invention;
Fig. 4 illustrates a mechanism of heat dissipation of the green color laser light source according to the embodiment of the present invention; and
Fig. 5 illustrates a heat dissipation channel of the image display apparatus according to the embodiment of the present invention.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

Hereinafter, embodiments of the present invention will be explained with reference to the drawings.

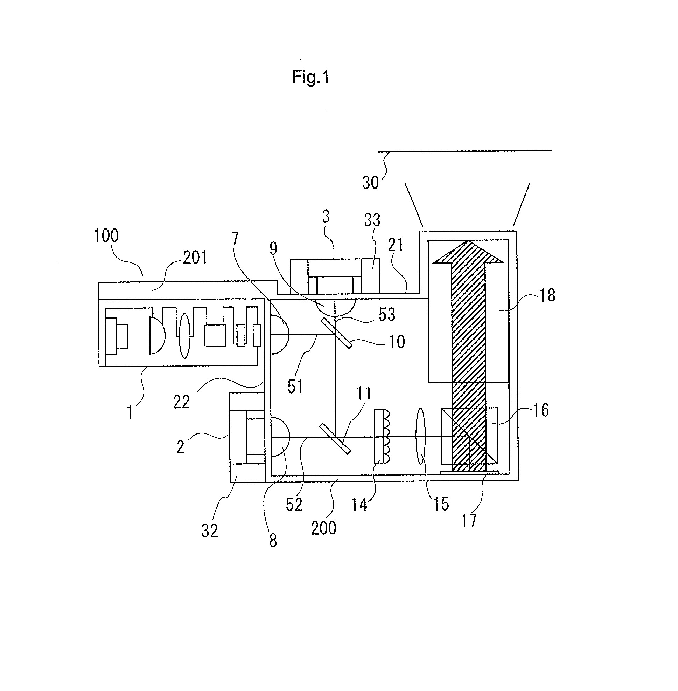

First, the configuration of the entire image display apparatus will be explained with reference to Fig. 1. Fig. 1 illustrates a schematic configuration of the image display apparatus according to an embodiment of the present invention.

In Fig. 1, the image display apparatus 100 is an image display apparatus that uses laser light as a light source and performs magnification and projection on the screen. The image display apparatus 100 has three light sources, that is, a green color laser light source apparatus 1, a red color laser light source apparatus 2, and a blue color laser light source apparatus 3. The image display apparatus 100 displays an image with the three-color laser light source apparatuses 1-3.

The green color laser light source apparatus 1 mainly outputs green color laser light 51 by converting non-visible infrared fundamental laser light to a half wavelength (described in detail below). The red color laser light source apparatus 2 outputs red color laser light 52 and the blue color laser light source apparatus 3 outputs blue color laser light 53.

A red color laser light source apparatus holder 32 and a blue color laser light source apparatus holder 33 retain the red color laser light source apparatus 2 and the blue color laser light source apparatus 3, respectively. Preferably, the red color laser light source apparatus holder 32 and the blue color laser light source apparatus holder 33 are composed of aluminum, copper, and the like, having high thermal conductivity. However, the red color laser light source apparatus holder 32 and the blue color laser light source apparatus holder 33 may be formed by combining metal and resin having high thermal conductivity.

Here, the arrangement of the green color laser light source apparatus 1, the red color laser light source apparatus 2, and the blue color laser light source apparatus 3 will be described in detail.

The blue color laser light source apparatus 3 is provided in a plane (hereinafter referred to as an A-plane 21) of a case 200 where a projecting lens 18 is retained, and laser light from the blue color laser light source apparatus 3 is guided inside the case 200.

The green color laser light source apparatus 1 and the red color laser light source apparatus 2 are provided in a plane (hereinafter referred to as a B-plane 22) perpendicular to the plane where the projecting lens 18 and the blue color laser light source apparatus 3 are provided on a side where the blue color laser light source apparatus 3 is provided.

The case 200 has a protrusion 201 so as to extend the plane (A-plane 21) where the projecting lens 18 and the blue color laser light source apparatus 3 are provided in a direction where the green color laser light source apparatus 1 is provided.

In sum, the protrusion 201 parallel to the A-plane 21 of the case 200 is formed integrally with the case 200 in a corner section of the case 200 where the A-plane 21 of the case 200 and the B-plane 22 of the case 200 are intersected.

The protrusion 201 may be formed as a separate member from the case 200. However, it is preferable that the protrusion 201 is formed integrally with the case 200 because heat dissipation can be facilitated.

A fixing plane of the green color laser light source apparatus 1 where an element such as an SHG element is fixed inside the green color laser light source apparatus 1 is arranged to contact the protrusion.

The green color laser light source apparatus 1 does not contact the B-plane 22 of the case 200 so as not to directly transmit heat to the B-plane 22 of the case 200, and a predetermined gap (0.5 mm or less in this embodiment) is provided. Further, since the red color laser light source apparatus 2 requires about 0.3 mm as an optical axis adjustment range, the distance between the green color laser light source apparatus 1 and the red color laser light source apparatus 2 is 0.3 mm or more.

The reason why the predetermined gap is 0.5 mm or less in this embodiment is as follows. When the predetermined gap increases, the entire image display apparatus becomes large, or the distance between the green color laser light source apparatus 1 and a collimator lens 7 increases, which causes the use efficiency of light to be deteriorated by diffusion of the green color laser light 51 before reaching a collimator lens 7.

With this, as described below, it is possible to make it difficult for heat from the green color laser light source apparatus 1 to be transmitted to the red color laser light source apparatus 2. Consequently, the red color laser light source apparatus 2 having poor temperature characteristics can be used stably.

The collimator lenses 7-9 can change the laser light 51-53 of the respective colors output from the laser light source apparatuses 1-3 of the respective colors into collimated beams.

A dichroic mirror 10 as a light path guide and a dichroic mirror 11 as a light path guide are configured by forming a film that transmits or reflects laser light of a predetermined wavelength on the surface thereof.

A diffusing plate 14 diffuses laser light that passes therethrough. A field lens 15 converts the diffused laser light into a converging laser.

A PBS 16 (Polarized Beam Splitter) reflects the laser light 51-53 of the respective colors, and directs it to a spatial modulation element 17.

The spatial modulation element 17 adjusts deflection of the laser light 51-53 of the respective colors to form an image. The spatial modulation element 17 used in this embodiment is reflective liquid crystal.

A large-screen image is projected after passing through the projecting lens 18.

The laser light 51-53 of the respective colors from the laser light source apparatuses 1-3 of the respective colors is collimated by the collimator lenses 7-9, respectively. The collimated laser light 51-53 of the respective colors is directed toward the diffusing plate 14 by the dichroic mirrors 10 and 11; travels through the diffusing plate 14, the field lens 15, and the PBS 16 in this order; is reflected on the spatial modulation element 17; and is magnified and projected on a screen 30 by the projecting lens 18.

Next, a detailed explanation will be made on how the laser light 51-53 of the respective colors from the laser light source apparatuses 1-3 of the respective colors is directed in a predetermined direction.

The green color laser light source apparatus 1 outputs the green color laser light 51, which is collimated by the collimator lens 7, and reflected on the dichroic mirror 10 toward the dichroic mirror 11. The reflected green color laser light 51 is further reflected on the dichroic mirror 11 and thereby directed toward the diffusing plate 14.

Likewise, the red color laser light 52 output from the red color laser light source apparatus 2 is collimated by the collimator lens 8, and directed toward the diffusing plate 14 by being transmitted through the dichroic mirror 11.

Likewise, the blue color laser light 53 output from the blue color laser light source apparatus 3 is collimated by the collimator lens 9, and transmitted through the dichroic mirror 10. The transmitted blue color laser light 53 is reflected on the dichroic mirror 11 and thereby directed toward the diffusing plate 14.

In sum, the dichroic mirror 10 is coated with a green color reflecting film that reflects the green color laser light 51; and a blue color transmitting film that transmits the blue color laser light 53.

The dichroic mirror 11 is coated with a green color reflecting film that reflects the green color laser light 51; a red color transmitting film that transmits the red color laser light 52; and a blue color reflecting film that reflects the blue color laser light 53. The dichroic mirror 11 serves as a light path changing unit for directing the laser light 51-53 of the respective colors toward a predetermined direction. With the above-described configuration of Fig. 1, the laser light 51-53 of the respective colors is directed toward the diffusing plate 14.

The green color laser light 51, the red color laser light 52, and the blue color laser light 53 are diffused by the diffusing plate 14; reflected on the PBS 16 after the illumination distribution thereof is equalized by the filed lens 15; and radiated onto the spatial modulation element 17. The spatial modulation element 17 is reflective liquid crystal, and reflects the laser light 51-53 of the respective colors, that is directed as described above, to form an image based on the laser light 51-53 of the respective colors. The formed image is magnified by the projecting lens 18 and projected onto the screen 30. The green color laser light 51, the red color laser light 52, and the blue color laser light 53 are subject to temporal decomposition control, and the laser light source apparatuses 1-3 of the respective colors perform output sequentially. Accordingly, the laser light 51-53 of the respective colors is sequentially projected from the projecting lens 18, and an image is formed on the screen 30 based on after-images of the laser light 51-53 of the respective colors.

It is preferable that the green color laser light source apparatus 1 outputs the green color laser light 51 having a wavelength of 532 nm. However, as long as it is recognized as green, laser light having another wavelength range whose peak wavelength is in a range of 500-560 nm may be used. Likewise, it is preferable that the red color laser light source apparatus 2 outputs the red color laser light 52 having a wavelength of 640 nm. However, as long as it is recognized as red, laser light having another wavelength range whose peak wavelength is in a range of 610-750 nm may be used. Likewise, it is preferable that the blue color laser light source apparatus 3 outputs the blue color laser light 53 having a wavelength of 450 nm. However, as long as it is recognized as blue, laser light having another wavelength range whose peak wavelength is in a range of 435-480 nm may be used.

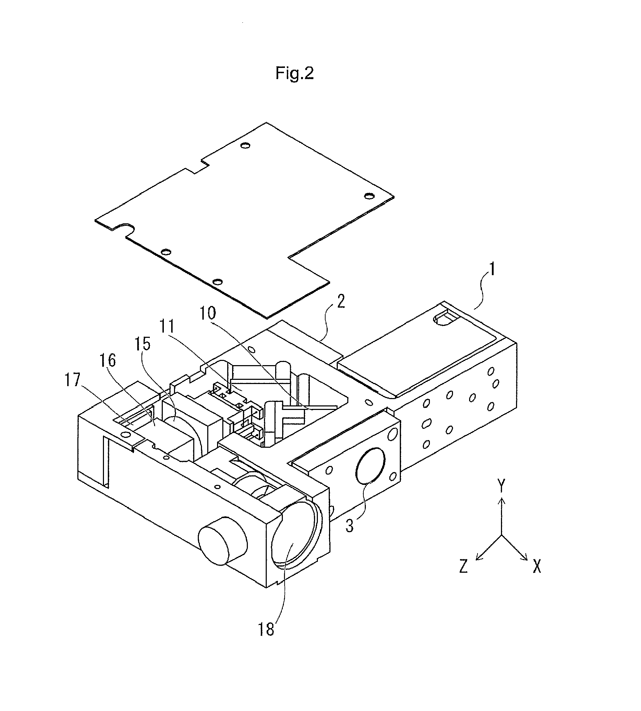

Next, a case where the above-described configuration is used as a module will be explained with reference to Fig. 2. Fig. 2 is a perspective view of the image display apparatus according to the embodiment of the present invention.

As shown in Fig. 2, the case 200 made of a material having high thermal conductivity such as copper or aluminum is provided with the green color laser light source apparatus 1; the red color laser light source apparatus 2; the blue color laser light source apparatus 3; the dichroic mirror 10; the dichroic mirror 11; the field lens 15; the PBS 16; the spatial modulation element 17; the projecting lens 18; and the like.

The above-described optical system is sealed by the case 200 and a metal lid 19 so as not to leak light from the above-described optical system.

### Explanation of green color laser light source

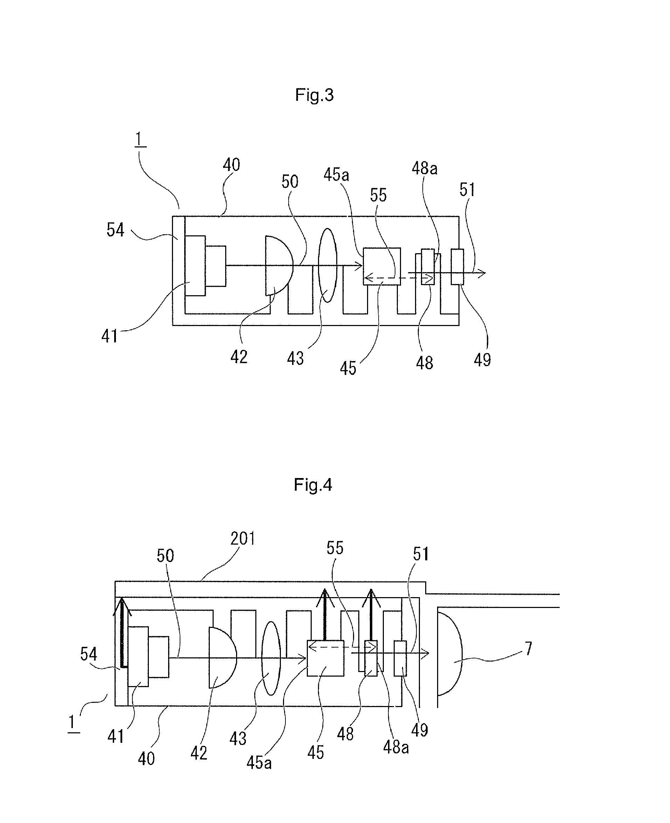

Next, the green color laser light source apparatus 1 will be explained with reference to Fig. 3. Fig. 3 illustrates the green color laser light source according to the embodiment of the present invention. The green color laser light source apparatus 1 outputs the green color laser light 51 by converting laser light having a wavelength twice as high as color to be obtained into a half wavelength. A detailed explanation will be made below.

A cover 40 is a case for accommodating each member, and a base 54 is a case to which each member is attached. It is preferable that the cover 40 and the base 54 are formed of aluminum, copper, and the like, whose thermal conductivity is high. However, the cover 40 and the base 54 may be formed by combining metal and resin having high thermal conductivity. A semiconductor laser 41 is provided so as to be in contact with the base 54, and outputs non-visible infrared fundamental laser light 50 having a wavelength of 808 nm. The infrared fundamental laser light 50 is altered to a collimated beam by a collimator lens 42, and focused on a laser medium 45 by a focusing lens 43. The laser medium 45 absorbs the infrared fundamental laser light 50, and thereby excites non-visible infrared modulated laser light 55 having a wavelength 1064 nm. The infrared modulated laser light 55 is converted into a half wavelength by an SHG (Second Harmonics Generation) element 48 which is a wavelength conversion element so as to become visible green color laser light 51 having a wavelength of 532 nm. The green color laser light 51 is transmitted through a glass cover 49 provided in an opening section of the cover 40, and output to the outside of the green color laser light source apparatus 1. The glass cover 49 is provided with a film that does not transmit the non-visible infrared fundamental laser light 50 and the infrared modulated laser light 55. With this, it is possible to prevent the infrared fundamental laser light 50 and the infrared modulated laser light 55 from being leaked to the outside.

In this embodiment, the laser medium 45 is configured by doping an inorganic optically-active material (crystal), which is made of Y(yttrium)VO₄(vanadate and has a thickness of 2 mm, with 1% of Nd (neodyum). More specifically, the laser medium 45 is doped by replacing Y of the YVO₄ as a base material with Nd⁺³ which is a fluorescing element.

An end surface 45a of the laser medium 45 is covered with an anti-reflection coating (AR coating) with respect to the infrared fundamental laser light 50, and also covered with a high-reflection coating (HR coating) with respect to the infrared modulated laser light 55 and the green color laser light 51. An end surface 48a of the SHG element 48 is covered with an anti-reflection coating (AR coating) with respect to the green color laser light 51, and also covered with a high-reflection coating (HR coating) with respect to the infrared modulated laser light 55.

In sum, the infrared fundamental laser light 50 is transmitted through the end surface 45a of the laser medium 45, and excited by the laser medium 45 so as to become the infrared modulated laser light 55. The infrared modulated laser light 55 is repeatedly reflected on the end surface 45a of the laser medium 45 and the end surface 48a of the SHG element 48, and laser light having high light intensity is obtained by resonance. The laser light is then converted into a half wavelength in the SHG element 48, and output to the outside of the green color laser light source apparatus 1. In other words, the end surface 45a and the end surface 48a form a resonator, and the cavity length is arranged to be 3 mm in this embodiment. However, the end surface 45a and the end surface 48a cannot keep high reflectance when dust adheres to the end surface 45a and the end surface 48a. This causes the light intensity of the infrared modulated laser light 55 to be deteriorated, which makes it impossible to convert into green color laser light 51 having high light intensity. In order to prevent dust and the like from entering the inside of the green color laser light source apparatus 1, the elements are covered with the cover 40, and also the opening where the green color laser light 51 is emitted is covered with the transparent glass cover 49.

With the above-described configuration, the green color laser light source apparatus 1 can output the green color laser light 51 having high light intensity. However, since the SHG element 48 can convert only about 40-50% of the infrared modulated laser light 55 into the green color laser light 51, the infrared modulated laser light 55 is output from the SHG element 48 together with the green color laser light 51. The green color laser light source apparatus 1 is thus provided with the glass cover 49 that prevents the non-visible infrared modulated laser light 55 from leaking.

Regarding the image display apparatus having the above-described configuration, it is necessary to secure stabilized output of light in the actual use environment. When the actual use surrounding environment changes, however, output of red color laser light, blue color laser light, and green color laser light changes and thereby the balance of output from the laser light sources of red, blue and green is destroyed depending on a heat dissipation method for each laser, which may make it impossible to keep good color hue. As a method for keeping color hue, electric current supplied with each laser may be increased corresponding to temperature increase so as to keep light energy from each laser light source. Increase in the supplied electric current, however, causes each laser light source to be deteriorated and the lifetime of each laser light source to be shorten. The present embodiment thus employs heat dissipation, so that the supplied electric current does not need to be increased.

Consequently, the image display apparatus according to the present embodiment is provided with a heat dissipation structure as shown in Fig. 1 so as to keep color hue without increasing output from each laser. Further, optical axis adjustment of each laser can be performed, and the image display apparatus can be downsized.

### Heat dissipation of each laser light source

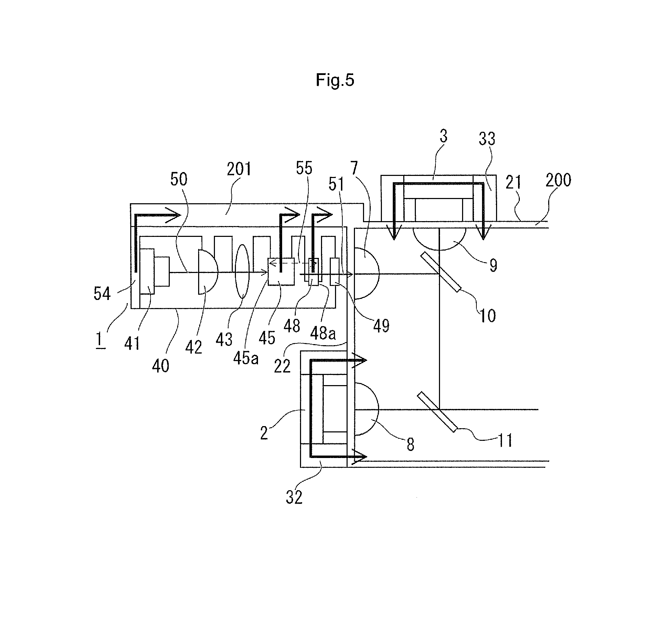

Heat dissipation structures of the green color laser light source apparatus 1, the red color laser light source apparatus 2, and the blue color laser light source apparatus 3 will be explained with reference to Fig. 4 and Fig. 5. Fig. 4 illustrates a mechanism of heat dissipation of the green color laser light source 1 according to the embodiment of the present invention, and Fig. 5 illustrates a heat dissipation channel of the image display apparatus according to the embodiment of the present invention.

The green color laser light source apparatus 1 includes heat-generating members, such as the semiconductor laser 41, the laser medium 45, the SHG element 48, and the like. Those members are attached to the base 54 having high thermal conductivity through members also having high thermal conductivity, and the like, such as aluminum or copper. Heat generated from the semiconductor laser 41, the laser medium 45, the SHG element 48, and the like, is transferred to the case 200, to which the projecting lens and the like is attached, through the base 54.

Here, it is preferable that the case 200 is made of aluminum, copper, and the like, whose thermal conductivity is high. However, the case 200 may be formed by combining metal and resin having high thermal conductivity. The heat-generating members including the semiconductor laser 41, the laser medium 45, the SHG element 48, and the like, are indirectly attached to the case 200.

The red color laser light source apparatus 2 and the blue color laser light source apparatus 3 are attached to the red color laser light source apparatus holder 32 and the blue color laser light source apparatus holder 33 composed of members having high thermal conductivity, respectively. It is arranged that heat generated from the red color laser light source apparatus 2 and the blue color laser light source apparatus 3 is easily and actively transmitted to the red color laser light source apparatus holder 32 and the blue color laser light source apparatus holder 33.

In order to allow heat to transmit from the red color laser light source apparatus 2 and the blue color laser light source apparatus 3 to the red color laser light source apparatus holder 32 and the blue color laser light source apparatus holder 33 easily and actively, the red color laser light source apparatus 2 and the blue color laser light source apparatus 3 may be press-fitted into the red color laser light source apparatus holder 32 and the blue color laser light source apparatus holder 33, respectively. Alternatively, heat sink grease and the like having high thermal conductivity may be interposed between the red color laser light source apparatus 2 and the red color laser light source apparatus holder 32, and between the blue color laser light source apparatus 3 and the blue color laser light source apparatus holder 33. Consequently, heat generated from the red color laser light source apparatus 2 and the blue color laser light source apparatus 3 is dissipated toward the case 200 through the red color laser light source apparatus holder 32 and the blue color laser light source apparatus holder 33.

In order to further improve the heat dissipation efficiency, the red color laser light source apparatus holder 32 and the blue color laser light source apparatus holder 33 may be provided with a member for enlarging a surface area such as cooling fins so as to dissipate the heat from the red color laser light source apparatus holder 32 and the blue color laser light source apparatus holder 33 to the air. It is preferable that the member for enlarging a surface area is integrally formed with the red color laser light source apparatus holder 32 and the blue color laser light source apparatus holder 33. However, the member for enlarging a surface area may be a separate member from the red color laser light source apparatus holder 32 and the blue color laser light source apparatus holder 33, and the member for enlarging a surface area may be attached to the red color laser light source apparatus holder 32 and the blue color laser light source apparatus holder 33. It is preferable that the member for enlarging a surface area is made of aluminum, copper, and the like, whose thermal conductivity is high. However, the member for enlarging a surface area may be formed by combining metal and resin having high thermal conductivity. Further, the red color laser light source apparatus holder 32 and the blue color laser light source apparatus holder 33 contact the case 200, and thereby the red color laser light source apparatus 2 and the blue color laser light source apparatus 3 are indirectly attached to the case 200.

As described above, the red color laser light source apparatus 2 having poor temperature characteristics can be used stably by attaching the blue color laser light source apparatus 3 to the A-plane, the red color laser light source 2 to the B-plane, and the green color laser light source apparatus 1 to the protrusion 201, and also by providing a space between the laser-emitting surface of the green color laser light source apparatus 1 and the case 200, and between the green color laser light source apparatus 1 and the red color laser light source apparatus 2, respectively. In the spaces between the laser-emitting surface of the green color laser light source apparatus 1 and the case 200, and between the green color laser light source apparatus 1 and the red color laser light source apparatus 2, a material having excellent cross-section property such as resin may be provided instead of an air layer alone.

In order to actively cool each laser source apparatus, forced air cooling using a cooling fan may be employed. In such a case, a cooling fan is provided in a position where it is possible to actively cool the red color laser light source apparatus 2 that has the worst temperature characteristics among the laser light sources, or the green color laser light source apparatus 1 and the red color laser light source apparatus 2.

With this configuration, it is possible to dissipate heat generated the green color laser light source apparatus 1 having a large amount of heat generation and the red color laser light source apparatus 2 having poor temperature characteristics. Consequently, it is possible to stably output the green color laser light 51 and the red color laser light 52.

In sum, with the above-described configuration, heat from the green color laser light source apparatus 1 is dissipated while being transmitted from the protrusion 201 to the case 200. The heat from the green color laser light source apparatus 1 is therefore difficult to be transmitted to the red color laser light source apparatus 2 compared to a case where the light-emitting surface is provided in the case 200. Consequently, it is possible to stably use the red color laser light source apparatus 2 having poor temperature characteristics.

Also, in the green color laser light source apparatus 1 that uses wavelength conversion, the fixing plane of the base 54, where the heat-generating members such as the semiconductor laser 41, the laser medium 45, the SHG element, and the like, are fixed, generate heats, and the fixing plane is located in the protrusion 201. Consequently, heat from the green color laser light source apparatus 1 can be dissipated more efficiently than a case where the light-emitting surface is provided in the case 200.

With this, as described above, while heat from the green color laser light source apparatus 1 having a large amount of heat generation can be dissipated efficiently, the red color laser light 52 can be output stably from the red color laser light source apparatus 2 having poor temperature characteristics.

### Attachment position of each laser (Downsizing of image display apparatus)

An explanation will be made on the attachment position of the green color laser light source apparatus 1, the red color laser light source apparatus 2, and the blue color laser light source apparatus 3. The blue color laser light source apparatus 3 is provided in a plane of the case 200 where the projecting lens 18 is retained. The red color laser light source apparatus 2 and the green color laser light source apparatus 1 are provided in another plane that is different from the plane where the projecting lens 18 is provided, and a plane in a longitudinal direction of the green color laser light source apparatus 1 contacts the protrusion 201 of the case 200.

With the above-described configuration, it is possible to use two dichroic mirrors relative to three kinds of laser light. Also, regarding the order of the light path, since the green color laser light source apparatus is interposed between the blue color laser light source apparatus and the red color laser light source apparatus, each laser light source can be provided in the order of the wavelengths of the green color laser light 51, the red color laser light 52, and the blue color laser light 53. Consequently, a reflecting film applied to the two dichroic mirrors can be formed easily, and the dead space of the entire apparatus can be reduced, resulting in downsizing.

Also, the entire apparatus can be downsized by positioning the A-plane closer to the inside than the protrusion 201 where the green color laser light source apparatus 1 is attached.

The area of the fixing plane of the protrusion 201 where the green color laser light source apparatus 1 is fixed is not specified, however, it is preferable that the area is similar to or greater than an area of the side surface of the green color laser light source apparatus 1 (the fixing plane where the semiconductor laser 41, the laser medium 45, and the SHG element 48 are fixed).

According to the image display apparatus of the present invention, it is possible prevent the light emitting efficiency of red color laser, blue color laser, and green color laser from being deteriorated even when temperature of the surrounding environment changes. Further, by performing optical axis adjustment, it is possible to project an image that is stable and has high luminance.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

## Claims

1. An image display apparatus comprising:
a red color laser light source that outputs red color laser light;
a blue color laser light source that outputs blue color laser light;
a green color laser light source that outputs green color laser light, the green color laser light source comprising a semiconductor laser that emits non-visible light, and a wavelength convertor that converts the non-visible light to visible light and thereby outputs a green color laser;
a projecting lens that outputs the laser light of the respective colors; and
a case that retains the red color laser light source, the blue color laser light source, and the projecting lens,
wherein the case has a protrusion that retains the green color laser light source.

2. The image display apparatus according to claim 1, wherein the protrusion is provided so as to extend a plane of the case in which the projecting lens is retained.

3. The image display apparatus according to claim 1, wherein the protrusion is integrally formed with the case.

4. The image display apparatus according to claim 1, wherein a predetermined gap is provided by the protrusion between the green color laser light source and the case.

5. The image display apparatus according to claim 1, wherein a plane of the green color laser light source in a longitudinal direction contacts the protrusion.

6. The image display apparatus according to claim 4, wherein resin is provided in the gap.

7. The image display apparatus according to claim 1, wherein the blue color laser light source is positioned in a plane of the case where the projecting lens is retained, and the red color laser light source is positioned in another plane of the case which is different from the plane where the projecting lens is retained.

8. The image display apparatus according to claim 7, wherein the red color laser light source is positioned in a plane of the case that is perpendicular to the protrusion.

9. The image display apparatus according to claim 1, wherein the green color laser light source further comprises a base that retains the semiconductor laser and the wavelength convertor, and the base contacts the protrusion.

10. The image display apparatus according to claim 9, wherein the base is formed of aluminum or copper.
